(19) Europäisches Patentamt
European Patent Office
Office européen des brevets

(11) **EP 2 725 414 A1**

(12) **EUROPEAN PATENT APPLICATION**

(43) Date of publication:
**30.04.2014 Bulletin 2014/18**

(51) Int Cl.:
***G02F 1/1345*** *(2006.01)*

(21) Application number: **12194598.4**

(22) Date of filing: **28.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2012 KR 20120118861**

(71) Applicant: **LG Display Co., Ltd.**
**Seoul 150-721 (KR)**

(72) Inventors:
• **Kim, Daehyun**
**121-886 Seoul (KR)**

• **Shin, Hongjae**
**134-060 Seoul (KR)**
• **Yoon, Joongsun**
**413-841 Gyeonggi-do (KR)**
• **Shinji, Takasugi**
**413-811 Gyeonggi-do (KR)**

(74) Representative: **Viering, Jentschura & Partner Patent- und Rechtsanwälte**
**Am Brauhaus 8**
**01099 Dresden (DE)**

Remarks:
Amended claims in accordance with Rule 137(2) EPC.

(54) **Display device**

(57) A display device comprising: a display panel including data lines and scan lines; a gate drive IC to supply a first scan pulse to first scan lines and a second scan pulse to second scan lines; and a data drive IC to supply a data voltage to the data lines, wherein the gate drive IC is connected to the first scan lines through the first gate link lines and to the second scan lines through the second gate link lines, and a difference between a maximum resistance value and a minimum resistance value of the first gate link lines is different from a difference between a maximum resistance value and a minimum resistance value of the second gate link lines.

**FIG. 3**

EP 2 725 414 A1

**Description**

CROSS-REFERENCE TO RELATED APPLICATIONS

This application claims the benefit of Korean Patent Application No. 10-2012-0118861, filed on October 25 2012, in the Korean Intellectual Property Office, the entire disclosure of which is incorporated by reference herein for all purposes.

BACKGROUND

Field

This document relates to a display device to minimize non-uniformity of a brightness of a display panel.

Related Art

Requirements for a display device to display an image are increased in various forms according to the development of multimedia. Recently, several displays have been utilized, such as a liquid crystal display (LCD), a plasma display panel (PDP), an organic light emitting device (OLED) and the like.

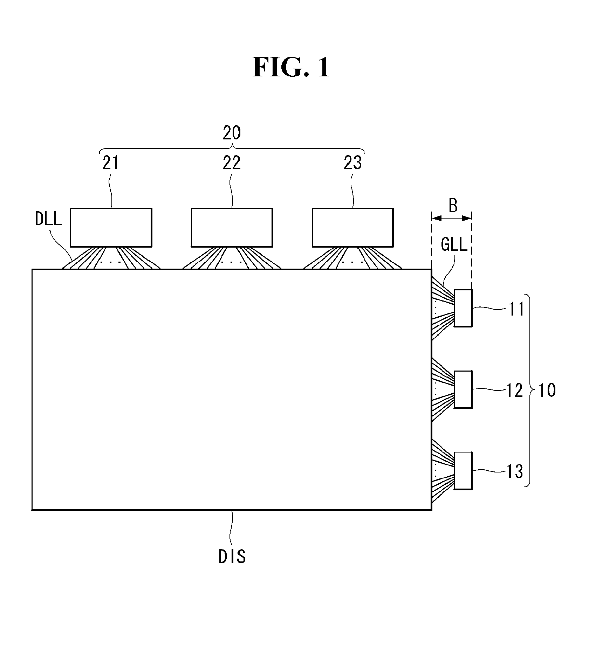

FIG. 1 is a block diagram illustrating an example of a flat panel display device of the prior art. Referring to FIG. 1, the flat panel display device of the prior art includes a display panel DIS, gate drive circuit 10, a data drive circuit 20 and the like. The display panel DIS includes gate lines, data lines, and pixels disposed in a matrix. Each of pixels of the display panel DIS displays an image by receiving a data voltage supplied to the data lines from the data drive circuit 20 in response to a gate signal supplied to the gate lines from the gate drive circuit 10. The gate drive circuit 10 includes multiple gate drive ICs 11, 12 and 13 to generate the gate signal sequentially, and each of the gate drive ICs 11, 12 and 13 is connected to the gate lines of the display panel DIS through gate link lines GLL. The data drive circuit 20 includes multiple data drive ICs 21, 22 and 23 to supply the data voltage, and each of the data drive ICs 21, 22 and 23 is connected to the data lines of the display panel DIS through a data link line DLL.

Since a size of the gate drive IC 11, 12 and 13 is different from that of the display panel DIS, lengths of the gate link lines GLL formed from a center portion to an edge of the gate drive IC 11, 12 and 13 are different from each other. In other words, a central gate link line connecting the gate line with a center portion of the gate drive IC 11, 12 and 13 has a minimum length, and an edge gate link line connecting the gate line with an edge of the gate drive IC 11, 12 and 13 has a maximum length. As a result, the central gate link line has a minimum line resistance, and the edge gate link line has a maximum line resistance.

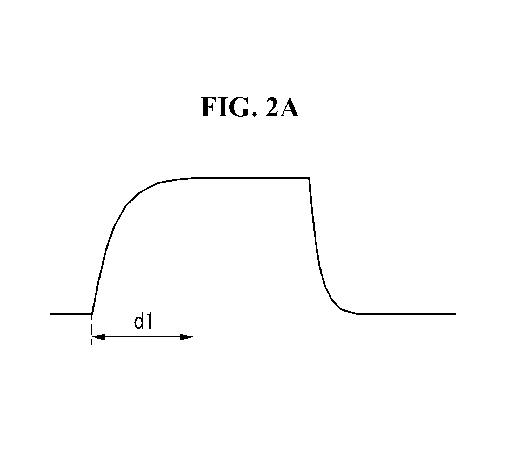

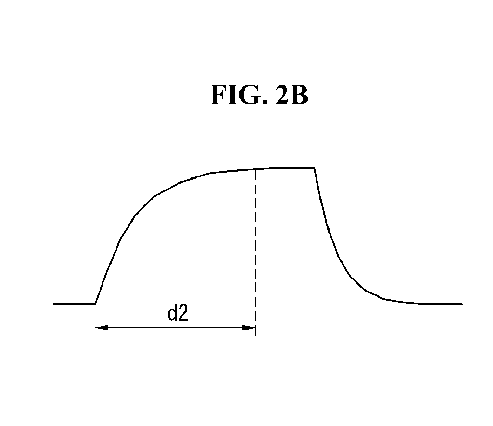

FIG. 2a is a diagram illustrating a waveform of a gate pulse supplied through a central gate link line, and FIG. 2b is a diagram illustrating a waveform of a gate pulse supplied through an edge gate link line. Referring to FIG. 2a, since the line resistance of the central gate link line is lower, the gate pulse supplied to the gate line through the central gate link line is lower to a pulse delay d1. In contrast, referring to FIG. 2b, since the line resistance of the edge gate link line is higher, the gate pulse supplied to the gate line through the edge gate link line is higher to a pulse delay d2. Due to a difference of this pulse delay, even if an identical voltage is applied to pixels to which the gate pulse is supplied through the edge gate link line and pixels to which the gate pulse is supplied through the central gate link line, there is a problem in that a brightness displayed by the pixels to which the gate pulse is supplied through the edge gate link line is different from that displayed by the pixels to which the gate pulse is supplied through the edge gate link line. That is, a problem in that the brightness of the display panel has non-uniformity according to a location occurs.

In addition, in order to highlight a design of the display device, a bezel area B of the display device is minimized. Accordingly, spacing between the gate drive IC 11, 12 and 13 and the display panel DIS is formed to be short greatly. The bezel area B means a non-display area that does not display an image on the display device. The difference in the line resistance of the gate link lines GLL can be reduced by adjusting a line width of the gate link lines GLL. However, since this can increase the bezel area B, it is difficult to address a task of the present invention is solved address.

SUMMARY

The present invention has been made in an effort to provide a display device to minimize non-uniformity of a brightness of the display panel, without increasing a bezel area.

A display device in accordance with exemplary embodiments of the present invention comprises a display panel including data lines and scan lines; a gate drive IC to supply a first scan pulse to first scan lines and a second scan pulse to second scan lines; and a data drive IC to supply a data voltage to the data lines, wherein the gate drive IC is connected to the first scan lines through the first gate link lines and to the second scan lines through the second gate link lines, and a difference between a maximum resistance value and a minimum resistance value of the first gate link lines is different from a difference between a maximum resistance value and a minimum resistance value of the second gate link lines.

The features and advantages described in this summary and the following detailed description are not intended to be limiting. Many additional features and advantages will be apparent to one of ordinary skill in the art in view of the drawings, specification and claims.

## BRIEF DESCRIPTION OF THE DRAWINGS

FIG. 1 is a block diagram illustrating an example of a flat panel display device of the prior art.

FIG. 2a is a diagram illustrating a waveform of a gate pulse supplied through a central gate link line.

FIG. 2b is a diagram illustrating a waveform of a gate pulse supplied through an edge gate link line.

FIG. 3 is a block diagram schematically illustrating a display device in accordance with an exemplary embodiment of the present invention.

FIG. 4 is a diagram illustrating an example of a pixel in accordance with a first exemplary embodiment of the present invention.

FIG. 5 is a diagram illustrating gate link lines connecting gate lines of a display panel with a gate drive IC in accordance with a first exemplary embodiment of the present invention.

FIG. 6 is a graph illustrating variations of line resistance values of gate link lines in accordance with a first exemplary embodiment of the present invention.

FIG. 7 is a diagram illustrating an example of a pixel in accordance with a second exemplary embodiment of the present invention.

FIG. 8 is a diagram illustrating gate link lines connecting gate lines of a display panel with a gate drive IC in accordance with a second exemplary embodiment of the present invention.

FIG. 9 is a graph illustrating variations of line resistance values of first and second gate link lines in accordance with a second exemplary embodiment of the present invention.

## DETAILED DESCRIPTION OF THE EMBODIMENTS

The invention will be described more fully hereinafter with reference to the accompanying drawings, in which example embodiments of the inventions are shown. This invention may, however, be embodied in many different forms and should not be construed as limited to the embodiments set forth herein. Like reference numerals designate like elements throughout the specification. In the following description, if it is decided that the detailed description of known function or configuration related to the invention makes the subject matter of the invention unclear, the detailed description is omitted.

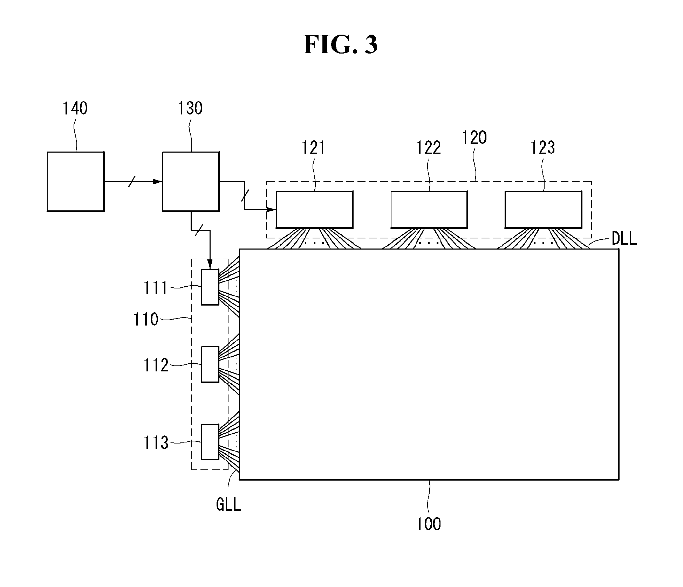

FIG. 3 is a block diagram schematically illustrating a display device in accordance with an exemplary embodiment of the present invention. Referring to FIG. 3, in accordance with an exemplary embodiment of the present invention, the display device includes a display panel 100, a gate drive circuit 110, a data drive circuit 120, a timing controller 130, a host system 140, and the like.

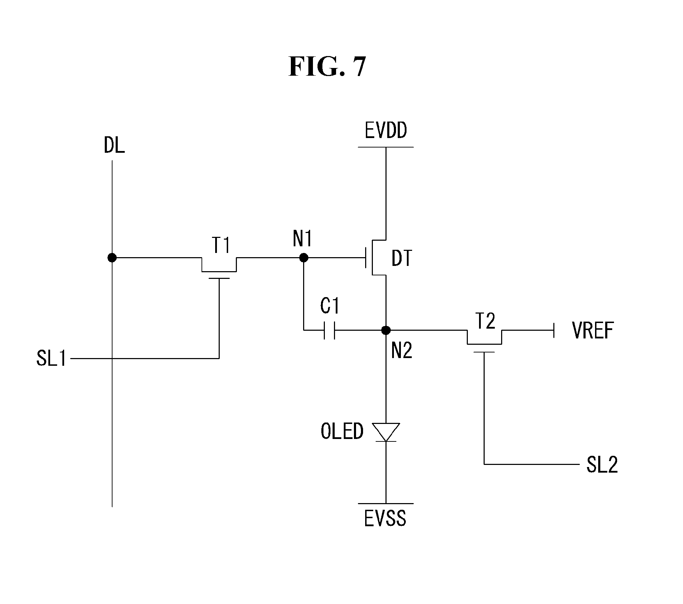

The display panel 100 of the display device in accordance with an exemplary embodiment of the present invention may be implemented as a flat panel display device, such as a liquid crystal display (LCD), a field emission display (FED), a plasma display panel (PDP), and the like. The display panel 100 implemented as a liquid crystal display will be mainly described in FIG. 3, and the display panel 100 implemented as an organic light emitting diode (OLED) will be described in FIG. 7.

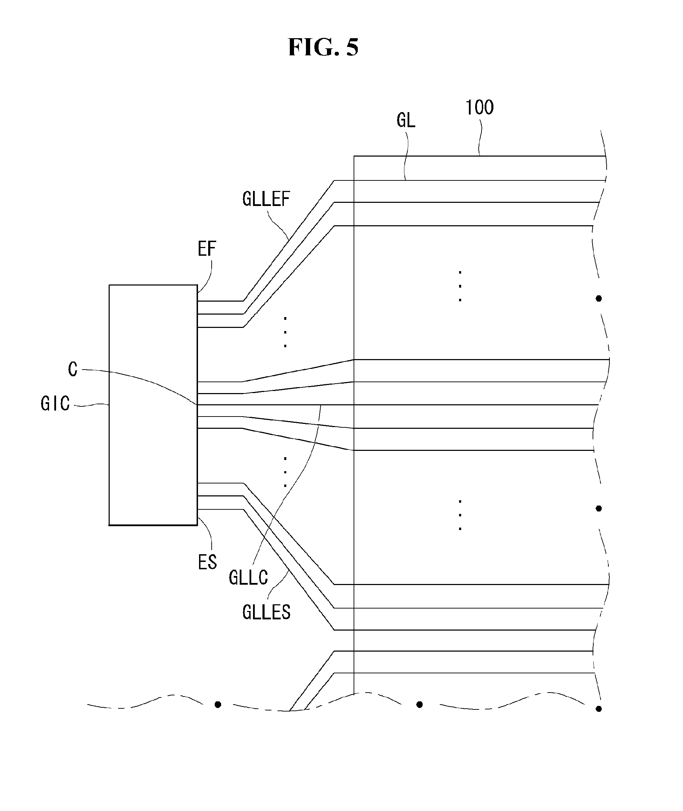

The gate drive circuit 110 includes multiple gate drive ICs (integrated circuits) 111, 112 and 113. Each of the gate drive ICs 111, 112 and 113) supplies at least one or more gate pulse (or scan pulse) to control at least one or more switching TFT of each of pixels to a gate line (or scan line) of the display panel 100. The gate drive ICs 111, 112 and 113 are connected to the gate lines through a gate link line GLL. The gate drive ICs 111, 112 and 113 may be mounted on a gate tape carrier package (TCP), and the gate TCP may be bonded to the display panel 100 by a tape automated bonding (TAB) process. Otherwise, the gate drive ICs 111, 112 and 113 may be directly formed along with pixels of the display panel 100 by a gate in panel (GIP) process at the same time. A detailed description for the gate link lines GLL and the gate drive ICs 111, 112 and 113 will be described with reference to FIGS. 5 and 7.

The data drive circuit 120 includes multiple source drive ICs 121, 122 and 123. The source drive ICs 121, 122 and 123 receive digital image data (RGB) from the timing controller 130. The source drive ICs 121, 122 and 123 converts the digital image data (RGB) into a data voltage using gamma compensation voltages according to source timing control signals from the timing controller 130, and to synchronize the data voltage with the gate pulse to supply the voltage to data lines of the display panel 100. The source drive ICs 121, 122 and 123 is connected to the data lines through a data link line (DLL). The source drive ICs 121, 122 and 123 may be mounted on the source TCP, and the source TCP may be bonded to the display panel 100 and a source printed circuit board (PCB) by the TAB process. Otherwise, the source drive ICs 121, 122 and 123 may be directly bonded to the display panel 100 by a chip on glass (COG) process.

The timing controller 130 receives the digital image data (RGB) and a timing signal from the host system 140. The timing signal may include a vertical synchronization signal, a horizontal synchronization signal, a data enable signal, a dot clock, and the like. The timing controller 130 generates timing control signal to control an operation timing of the gate drive circuit 110 and the data drive circuit 120 based on the timing signal. The timing control signals include a gate timing control signal (GCS) to control an operation timing of the gate drive circuit 110 and a data timing control signal (DCS) to control an operation timing of the data drive circuit 120. The timing controller 130 outputs the gate timing control signal (GCS) to the gate drive circuit 110 and outputs the digital image data RGB and the data timing control signal DCS to the data drive circuit 120.

The host system 140 may include a system on chip having a built-in scaler to convert the digital image data (RGB) input from an external video source device to a data format of a resolution suitable to be displayed on the display panel 100. The host system 140 supplies the digital image data (RGB) and the timing signals to the timing controller 130 through an interface such as a low voltage differential signaling (LVDS) interface, a transition minimized differential signaling (TMDS) interface or the like.

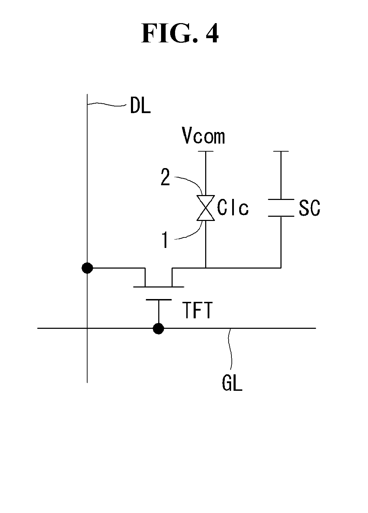

FIG. 4 is a diagram illustrating an example of a pixel in accordance with a first exemplary embodiment of the present invention. Referring to FIG. 4, the pixel in accordance with a first exemplary embodiment of the present invention is mainly described for the display panel 100 implemented as a liquid crystal display. When the display panel 100 is implemented as the liquid crystal display, the display panel 100 includes two substrates and a liquid crystal layer between the two substrates. The multiple data lines DL and the multiple gate lines GL intersect with a lower substrate display panel 100. According to the intersecting structure of the data lines DL and the gate lines GL, the pixels are disposed in a matrix in the display panel 100. Each of the pixels includes a thin film transistor (hereinafter, referred to as "TFT"), a liquid crystal cell Clc connected to the TFT, a storage capacitor SC and the like. The TFT supplies a data voltage of the data line DL to a pixel electrode 1 in response to a gate pulse of the gate line GL. The storage capacitor SC maintains for a determined period the data voltage supplied to the pixel electrode 1. The liquid crystal cell Clc is driven by an electric field between the pixel electrode 1 and a common electrode 2. The common electrode 2 is formed on an upper glass substrate in a vertical electric field driving mode such as a twisted nematic (TN) mode and a vertical alignment (VA) mode, and on a lower glass substrate along with the pixel electrode 1 in a horizontal electric field driving mode such as an in plane switching (IPS) mode and a fringe field switching (FFS) mode. A black matrix, a color filter, and the like are formed on the upper substrate of the display panel 100. Polarizers are attached to each of the upper glass substrate and the lower glass substrate of the display panel 100, and an alignment layer to set a pretilt angle of the liquid crystal to an inner surface being in contacted with the liquid crystal.

When the display panel 100 is implemented as a liquid crystal display, the display device requires a backlight unit for irradiating light on the display panel 100. The backlight unit includes multiple light sources for irradiating light on the display panel 100. The backlight unit may be implemented as any one of a direct type and an edge type. The direct type backlight unit has a structure in which multiple optical sheets and diffusion plates are stacked on a bottom of the display panel 100, and multiple light sources are disposed on a bottom of the diffusion plate. The edge type backlight unit has a structure in which multiple optical sheets and light guide plates are stacked on a bottom of the display panel 100, and multiple light sources are disposed on a side surface of the diffusion plate.

FIG. 5 is a diagram illustrating gate link lines connecting gate lines of a display panel with a gate drive IC in accordance with a first exemplary embodiment of the present invention. Referring to FIG. 5, a gate drive IC GIC is connected to gate lines GL of the display panel 100 through gate link lines GLL. Since a size of the gate drive IC GIC is different from that of the display panel 100, lengths of the gate link lines GLL formed from a center portion C to one side edge EF of the gate drive IC GIC are different from each other. As the center portion C of the gate drive IC GIC is closer to one side edge EF, the length of the gate link line GLL is longer. In other words, among the gate link lines GLL, a central gate link line GLLC to connect the gate line GL to the center portion C of the gate drive IC GIC has a minimum length, and one side edge gate link line GLLEF to connect the gate line GL to one side edge EF of the gate drive GIC has a maximum length. Thus, the central gate link line GLLC has a minimum line resistance, and the one side edge gate link line GLLEF has a maximum line resistance.

In addition, as the center portion C of the gate drive IC GIC is closer to another side edge ES, the length of the gate link line GLL is longer. That is, among gate link lines GLL, the central gate link line GLLC to connect the gate line GL to the center portion(C) of the gate drive IC GIC has the minimum length, and an other side edge gate link line GLLES to connect the gate line GL to the other side edge ES of the gate drive GIC has the maximum length. Thus, the central gate link line GLLC has a minimum line resistance, and the other side edge gate link line GLLES has a maximum line resistance.

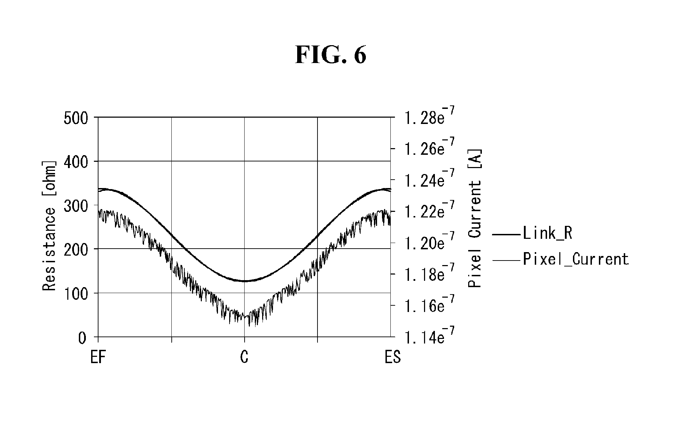

As a result, since the length of the gate link line GLL is longer, as the center portion C of the gate drive IC GIC is closer to the one side edge EF or the other side edge ES, the line resistance of the gate link line GLL is higher, as the center portion C of the gate drive IC GIC is closer to the one side edge EF or the other side edge ES. As shown in FIGS. 2a and 2b, due to a line resistance difference between the gate link lines GLL, the pulse delay of the gate pulse occurs, and thus, the brightness non-uniformity of the display panel 100 will be caused. Accordingly, there is a need to minimize the line resistance of the central gate link line GLLC and the line resistance of the one side edge gate link line GLLEF or the other side edge gate link line GLLES. In this respect, it will be described with reference to FIG. 6.

FIG. 6 is a graph illustrating variations of line resistance values of gate link lines in accordance with a first exemplary embodiment of the present invention. Referring to FIG. 6, line resistance values LINK_R of the gate link lines GLL connected to the gate drive IC GIC is reduced as the one side edge EF is closer to the center portion C, and line resistance values LINK_R of the gate link lines GLL connected to the gate drive IC GIC is increased as the center portion C is closer to the other side edge ES.

In particular, the line resistance values LINK_R of the gate link lines GLL connected to the gate drive IC GIC have a U-shaped distribution from the one side edge EF to the other side edge ES. Specifically, the resistance values LINK_R of the gate link lines GLL connected from the one side edge EF to the other side edge ES of the gate drive IC GIC may be implemented to be distributed as a curve defined by a fourth order function. The curve defined by the fourth order function as shown in FIG. 6 may be defined by Equation 1. the resistance values LINK_R of the gate link lines GLL connected from the one side edge EF to the other side edge ES of the gate drive IC GIC will be distributed as a curve defined by the fourth order function by adjusting the line length and line width of the gate link lines GLL.

【Equation 1】

$$y = -ax^4 + bx^3 - cx^2 + dx + e$$

In Equation 1, x represents a location variable showing a location of the gate link line GLL at the other side edge ES from the one side edge EF of the gate drive IC GIC, and y represents a resistance value at the corresponding location. Constants a, b, c, d, and e may be varied, depending on how resistance values from the one side edge EF to the other side edge ES are designed.

Meanwhile, the data drive IC 21, 22, 23 is connected to the data lines through data link lines, and resistance values of the data link lines connected from one side edge to another side edge of the data drive IC 21, 22, 23 may be distributed to a curve defined by a fourth order function as shown in equation 1. In this case, the data link line connected to either the one side edge or the other side edge of the data drive IC 21, 22, 23 may have a maximum resistance value, and the data link line connected to a center portion of the data drive IC 21, 22, 23 may have a minimum resistance value.

FIG. 7 is a diagram illustrating an example of a pixel in accordance with a second exemplary embodiment of the present invention. Referring to FIG. 7, in the pixel in accordance with a second exemplary embodiment of the present invention, the display panel 100 implemented as an organic light emitting diode (OLED) is mainly described. The display panel 100 is formed such as the data lines D and the gate lines G intersect with each other, the intersecting area of the data lines D and the gate lines G is formed with a pixel array on which the pixels are disposed in a matrix. The each of pixels of display panel 100 includes at least one or more switching thin film transistor (TFT) T1 and T2, a driving TFT DT, an organic light emitting diode OLED, and at least one or more capacitor C1. The each of pixels displays an image by controlling a current that flows into the organic light emitting diode OLED using the switching TFTs T1 and T2 and the driving TFT DT. Specifically, since the driving TFT DT can adjust an amount of the current that flows into the organic light emitting diode OLED from a high-level voltage supplied to each of the pixels, the light emitting amount of the organic light emitting diode OLED can be adjusted. The display panel 100 can display the image in the form of a bottom emission, a top emission and the like according to a pixel structure.

Specifically, each of the pixels can be implemented as 3 TIC structure that includes three TFTs and one capacitor as shown in FIG. 7. A gate electrode of the driving TFT DT is connected to a first node N1, a source electrode is connected to a second node N2, and a drain electrode is connected to a high-level voltage supply source that supplies a high-level voltage. An anode of organic light emitting diode OLED is connected to the second node N2, and a cathode electrode is connected to a low-level voltage supply source that supplies a low-level voltage. The first TFT T1 supplies the data voltage to a first node N1 in response to a first scan pulse of a first logic level voltage supplied from a first scan line SL1. The gate electrode of the first TFT T1 is connected to the first scan line SL1 to which the first scan pulse is supplied, the source electrode is connected to the first node N1, and the drain electrode is connected to the data line DL to which the data voltage is supplied. The second TFT T2 allows the second node N2 to be initialized as a reference voltage in response to a second scan pulse of the first logic level voltage supplied from a second scan line SL2. The gate electrode of the second TFT T2 is connected to the second scan line SL2 to which the second scan pulse is supplied, the source electrode is connected to a reference voltage source REF to which a reference voltage is supplied, and the drain electrode is connected to the second node N2. Meanwhile, it should be noted that the pixel structure according to the second exemplary embodiment of the present invention as shown in FIG. 7 is only one exemplary embodiment, and is not limited to thereof.

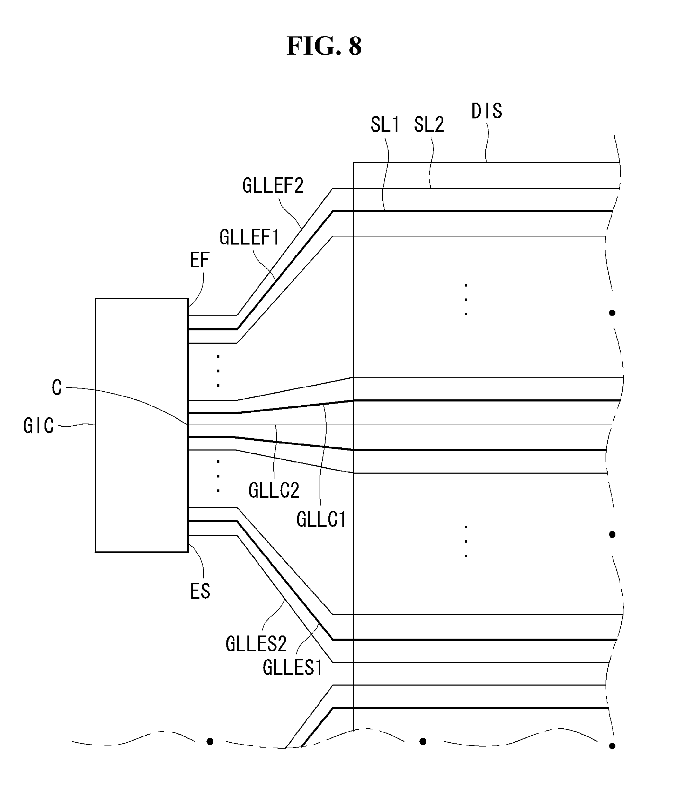

FIG. 8 is a diagram illustrating gate link lines that connects gate lines of a display panel to a gate drive IC in accordance with a second exemplary embodiment of the present invention. Referring to FIG. 8, the gate drive IC GIC is connected to first scan lines SL1 of the display panel 100 through first gate link lines, and to second scan lines SL2 through second gate link lines. As shown in FIG. 7, the first scan lines SL1 is lines that supply a first scan pulse, which is a signal to control the first TFT T1 of each of pixels, and the second scan lines SL2 may be implemented as lines that supply a second scan pulse, which is a signal to control the second TFT T2 of each of pixels. It should be noted that even if the pixel implemented as an organic light emitting diode (OLED) is described in FIG. 7, the description is not limited to thereof. That is, even if the pixel is implemented as a liquid crystal display, if the pixel includes two or more TFTs, the first scan lines SL1 are lines that supply signals to control any one TFT of the two or more TFTs, and the second scan lines SL2 may be implemented as lines that supply signals to control an other TFT of the two or more TFTs.

In addition, the first gate link lines represent as thick solid lines in FIG. 8, and a first one side edge gate link line GLLEF1, a first central gate link line GLLC1, and a first other side edge gate link line GLLES1 are shown as an example of first gate link lines for the convenience of explanation. The second gate link lines represent as thin solid lines in FIG. 8, and a second one side edge gate link line GLLEF2, a second central gate link line GLLC2, and a second other side edge gate link line GLLES2 are shown as an example of second gate link lines.

Meanwhile, since a size of the gate drive IC GIC is different from that of the display panel 100, lengths of the first and second gate link lines formed from a center portion C to one side edge EF of the gate drive IC GIC are different from each other. First, the lengths of the first and second gate link line is longer, as the center portion C of the gate drive IC GIC is closer to the one side edge EF. Among the first gate link lines connected from the center portion C to the one side edge EF of the gate drive IC GIC, the first central gate link line GLLC1 to connect the first scan line SL1 to the center portion C of the gate drive IC GIC has a minimum length, and the first one side edge gate link line GLLEF1 to connect the first scan line SL1 to one side edge EF of the gate drive GIC has a maximum length. Thus, the first central gate link line GLLC1 has a minimum line resistance, and the first one side edge gate link line GLLEF1 has a maximum line resistance. In addition, among the second gate link lines connected from the center portion C to the one side edge EF of the gate drive IC GIC, the second central gate link line GLLC2 to connect the second scan line SL2 to the center portion C of the gate drive IC GIC has a minimum length, and the first one side edge gate link line GLLEF1 to connect the second scan line SL2 to the one side edge EF of the gate drive GIC has a maximum length. Thus, the second central gate link line GLLC2 has a minimum line resistance, and the second one side edge gate link line GLLEF2 has a maximum line resistance.

In addition, the lengths of the first and second gate link line is longer, as the center portion C of the gate drive IC GIC is closer to the other side edge ES. Among the first gate link lines connected from the center portion C to the other side edge ES of the gate drive IC GIC, the first central gate link line GLLC1 to connect the first scan line SL1 to the center portion C of the gate drive IC GIC has a minimum length, and the first other side edge gate link line GLLES1 to connect the first scan line SL1 to other side edge ES of the gate drive GIC has a maximum length. Thus, the first central gate link line GLLC1 has a minimum line resistance, and the first other side edge gate link line GLLES1 has a maximum line resistance. In addition, among the second gate link lines connected from the center portion C to the other side edge ES of the gate drive IC GIC, the second central gate link line GLLC2 to connect the second scan line SL2 to the center portion C of the gate drive IC GIC has a minimum length, and the second other side edge gate link line GLLES2 to connect the second scan line SL2 to the other side edge ES of the gate drive GIC has a maximum length. Thus, the second central gate link line GLLC2 has a minimum line resistance, and the second other side edge gate link line GLLES2 has a maximum line resistance.

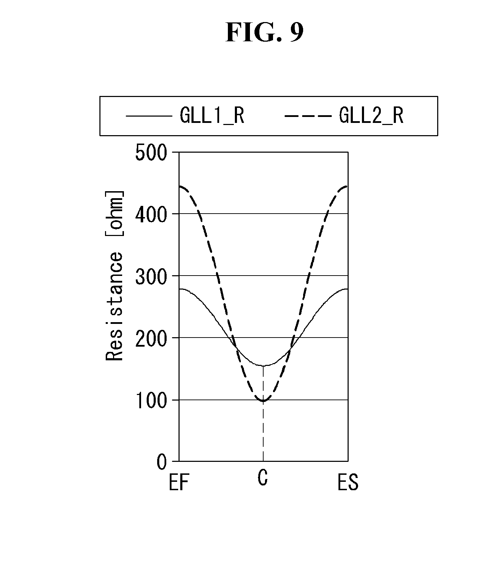

As a result, since the lengths of the first and second gate link lines are longer, as the center portion C of the gate drive IC GIC is closer to the one side edge EF or the other side edge ES, the line resistances of the first and second gate link lines are higher, as the center portion C of the gate drive IC GIC is closer to the one side edge EF or the other side edge ES. As shown in FIGS. 2a and 2b, due to a line resistance difference between the first and second link lines, the pulse delay of the gate pulse occurs, and thus, the brightness non-uniformity of the display panel 100 will be caused. Accordingly, there is a need to minimize the line resistance of the first central gate link line GLLC1 and the line resistance of the first one side edge gate link line GLLEF1 or the first other side edge gate link line GLLES1, and the line resistance of the second central gate link line GLLC2 and the line resistance of the second one side edge gate link line GLLEF2 or the second other side edge gate link line GLLES2. In this respect, it will be described with reference to FIG. 9.

FIG. 9 is a graph illustrating variations of line resistance values of first and second gate link lines in accordance with a second exemplary embodiment of the present invention. Referring to FIG. 9, line resistance values GLL1_R and GLL2_R of the first and second gate link lines connected to the gate drive IC GIC is reduced as the one side edge EF is closer to the center portion C. In addition, line resistance values GLL1_R and GLL2_R of the first and second gate link lines connected to the gate drive IC GIC is increased as the center portion C is closer to the other side edge ES.

In particular, the line resistance values GLL1_R of the first gate link lines connected to the gate drive IC GIC have a U-shaped distribution from the one side edge EF to the other side edge ES. Specifically, the resistance values GLL1_R of the first gate link lines connected from the one side edge EF to the other side edge ES of the gate drive IC GIC may be implemented to be distributed as a curve defined by the fourth order function. The resistance values GLL1_R of the first gate link lines connected from the one side edge EF to the other side edge ES of the gate drive IC GIC will be distributed as a curve defined by the fourth order function by adjusting the line length and line width of the first gate link lines. The curve defined by the fourth order function is described in detail with reference to Equation 1.

In addition, the line resistance values GLL2_R of the second gate link lines connected to the gate drive IC GIC have a U-shaped distribution from the one side edge EF to the other side edge ES. Specifically, the resistance values GLL2_R of the second gate link lines connected from the one side edge EF to the other side edge ES of the gate drive IC GIC may be implemented to be distributed as a curve defined by the fourth order function. The resistance values GLL2_R of the second gate link lines connected from the one side edge EF to the other side edge ES of the gate drive IC GIC will be distributed as a curve defined by the fourth order function by adjusting the line length and line width of the second gate link lines.

Meanwhile, the difference between the maximum resistance value and the minimum resistance value of first gate link lines is different from the difference between the maximum resistance value and the minimum resistance value of the second gate link lines. For example, as shown in FIG. 9, the difference between the maximum resistance value and the minimum resistance value of first gate link lines is lower than the difference between the maximum resistance value and the minimum resistance value of the second gate link lines. In order to drive the pixels of the display panel 100, if two or more scan pulses are supplied, since two or more scan lines are required, the number of gate link lines is increased. In this case, since the density of the gate link lines is increased, it is not easy to adjust the line length and the line width of the gate link lines, without increasing a bezel area. Therefore, the present invention is to minimize the maximum resistance value and the minimum resistance value of the gate link lines connected to the scan lines that supply the scan pulse further influencing on the non-uniformity of the brightness between the two or more scan pulses. For example, if the first scan pulse further has influenced the non-uniformity of the brightness, according to the present invention, the difference between the maximum resistance value and the minimum resistance value of the first gate link lines connected to the first scan line SL1 to supply the first scan pulse is lower than that between the maximum resistance value and the minimum resistance of another gate link lines. Therefore, the present invention is capable of minimizing non-uniformity of a brightness of the display panel, without increasing a bezel area. The bezel area means a non-display area that does not display an image on the display device.

As described above, according to the present invention, the resistance values of the gate link lines from the one side edge to the other side edge of the gate drive IC can be adjusted to be distributed as a curve defined by a fourth order function. Also, the resistance values of the data link lines from the one side edge to the other side edge of the data drive IC can be adjusted to be distributed as a curve defined by a fourth order function. In addition, if two or more scan pulses are supplied to the display panel, the present invention is to minimize the difference between the maximum resistance value and the minimum resistance value of the gate link lines connected to the scan lines that supply the scan pulse further influencing on the non-uniformity of the brightness. Therefore, the present invention is capable of minimizing non-uniformity of a brightness of the display panel, without increasing a bezel area.

Further preferred embodiments of the present invention are given in the following paragraphs:

A first further preferred embodiment of the present invention is a display device comprising: a display panel including data lines and gate lines; a gate drive IC to supply gate pulses to the gate lines; and a data drive IC supplying data voltages to the data lines, wherein the gate drive IC is connected to the gate lines through gate link lines, and resistance values of the gate link lines connected from one side edge to another side edge of the gate drive IC are distributed to a curve defined by a fourth order function.

In a first aspect of the first further preferred embodiment of the present invention, the gate link line connected to either the one side edge or the other side edge of the gate drive IC has a maximum resistance value, and the gate link line connected to a center portion of the gate drive IC has a minimum resistance value.

In a second aspect of the first further preferred embodiment of the present invention, the data drive IC is connected to the data lines through data link lines, and resistance values of the data link lines connected from one side edge to another side edge of the data drive IC are distributed to a curve defined by a fourth order function.

According to the second aspect of the first further embodiment, the data link line connected to either the one side edge or the other side edge of the data drive IC has a maximum resistance value, and the data link line connected to a center portion of the data drive IC has a minimum resistance value.

Although the embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A display device comprising:

   a display panel including data lines and scan lines;
   a gate drive IC to supply a first scan pulse to first scan lines and a second scan pulse to second scan lines; and
   a data drive IC to supply a data voltage to the data lines,
   wherein the gate drive IC is connected to the first scan lines through the first gate link lines and to the second scan lines through the second gate link lines, and
   a difference between a maximum resistance value and a minimum resistance value of the first gate link lines is different from a difference between a maximum resistance value and a minimum resistance value of the second gate link lines.

2. The display device according to claim 1, wherein the difference between the maximum resistance value and the minimum resistance value of the first gate link lines is less than the difference between the maximum resistance value and the minimum resistance value of the second gate link lines.

3. The display device according to claim 1, wherein resistance values of the first gate link lines connected from one side edge to another side edge of the gate drive IC are distributed to a curve defined by a fourth order function.

4. The display device according to claim 1, wherein resistance values of the second gate link lines connected from one side edge to another side edge of the gate drive IC are distributed to a curve defined by a fourth order function.

5. The display device according to claim 1, wherein the resistance value of the first gate link line connected to either the one side edge or the other side edge of the gate drive IC is a maximum resistance value of the first gate link lines, and
   the resistance value of the first gate link line connected to a center portion of the gate drive IC is a minimum resistance value of the first gate link line.

6. The display device according to claim 1, wherein the resistance value of the second gate link line connected to either the one side edge or the other side edge of the gate drive IC is a maximum resistance value of the second gate link lines, and
   the resistance value of the second gate link line connected to a center portion of the gate drive IC is a minimum resistance value of the second gate link line.

**Amended claims in accordance with Rule 137(2) EPC.**

1. A display device comprising:

   a display panel including data lines, first and second scan lines, and pixels disposed in a matrix;
   a gate drive IC to supply a first scan pulse to the first scan lines and a second scan pulse to the second scan lines; and
   a data drive IC to supply a data voltage to the data lines,
   wherein the gate drive IC is connected to the first scan lines through first gate link lines and to the second scan lines through second gate link lines, and
   a difference between a maximum resistance value and a minimum resistance value of the first gate link lines is less than a difference between a maximum resistance value and a minimum resistance value of the second gate link lines,
   wherein each pixel has a first TFT connected to the first scan line and a second TFT connected to the second scan line.

2. The display device according to claim 1, wherein resistance values of the first gate link lines connected from one side edge to another side edge of the gate drive IC are distributed to a curve defined by a fourth order function.

**3.** The display device according to claim 1, wherein resistance values of the second gate link lines connected from one side edge to another side edge of the gate drive IC are distributed to a curve defined by a fourth order function.

**4.** The display device according to claim 1, wherein the resistance value of the first gate link line connected to either the one side edge or the other side edge of the gate drive IC is a maximum resistance value of the first gate link lines, and

the resistance value of the first gate link line connected to a center portion of the gate drive IC is a minimum resistance value of the first gate link line.

**5.** The display device according to claim 1, wherein the resistance value of the second gate link line connected to either the one side edge or the other side edge of the gate drive IC is a maximum resistance value of the second gate link lines, and

the resistance value of the second gate link line connected to a center portion of the gate drive IC is a minimum resistance value of the second gate link line.

# FIG. 1

# FIG. 2A

# FIG. 2B

# FIG. 3

# FIG. 4

# FIG. 5

## FIG. 6

# FIG. 7

# FIG. 8

# FIG. 9

Europäisches
Patentamt

European
Patent Office

Office européen
des brevets

# EUROPEAN SEARCH REPORT

Application Number

EP 12 19 4598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 870 163 A (WATANABE MAKOTO [JP] ET AL) 9 February 1999 (1999-02-09) * column 1, line 12 - column 3, line 43; figures 1A,1B,7 * ----- | 1,2,5,6 | INV. G02F1/1345 |
| X | US 6 104 465 A (NA BYOUNG-SUN [KR] ET AL) 15 August 2000 (2000-08-15) * column 1, lines 24-62; figures 1-3 * ----- | 1-4 | |

TECHNICAL FIELDS
SEARCHED        (IPC)

G02F

The present search report has been drawn up for all claims

| Place of search | Date of completion of the search | Examiner |
|---|---|---|
| Munich | 26 February 2013 | Smid, Albert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 725 414 A1

**ANNEX TO THE EUROPEAN SEARCH REPORT
ON EUROPEAN PATENT APPLICATION NO.**                    EP 12 19 4598

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2013

| Patent document cited in search report | | Publication date | Patent family member(s) | | Publication date |
|---|---|---|---|---|---|
| US 5870163 | A | 09-02-1999 | JP<br>JP<br>US | 2776357 B2<br>9211479 A<br>5870163 A | 16-07-1998<br>15-08-1997<br>09-02-1999 |
| US 6104465 | A | 15-08-2000 | US<br>US | RE43575 E1<br>6104465 A | 14-08-2012<br>15-08-2000 |

EPO FORM P0459

For more details about this annex : see Official Journal of the European Patent Office, No. 12/82

**EP 2 725 414 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120118861